# EUROPÄISCHE PATENTSCHRIFT

(11) **EP 1 988 068 B1**
(45) Veröffentlichungstag und Bekanntmachung des Hinweises auf die Patenterteilung: **12.04.2017**
(21) Anmeldenummer: 07107361.3
(22) Anmeldetag: 02.05.2007
(51) Int. Cl.: B29C 70/02, C04B 35/52, C04B 35/573, C04B 35/83, B29K 707/04, B29K 55/00, B29K 79/00, B29K 81/00, B29K 105/00, B29K 25/00, B29K 69/00, B29K 83/00

(54) **VERFAHREN ZUR HERSTELLUNG VON MIT FASERN VERSTÄRKTEN FORMKÖRPERN**
PROCESS OF MANUFACTURE OF FIBER-REINFORCED SHAPED BODIES
PROCÉDÉ DE FABRICATION DES CORPS RENFORCÉS PAR FIBRES

(43) Veröffentlichungstag der Anmeldung: 05.11.2008
(73) Patentinhaber: SGL Carbon SE, 65201 Wiesbaden (DE)
(72) Erfinder: Kienzle, Andreas, 86753 Möttingen OT Balgheim (DE); Putz, Thomas, 86707 Westendorf (DE); Klotz, Christian, 86866 Mickhausen (DE)

(56) Entgegenhaltungen:
- WO-A-2004/013236
- GB-A- 1 243 161
- GB-A- 1 524 232
- US-A- 3 713 927
- US-A1- 2006 251 894

## Beschreibung

Die vorliegende Erfindung betrifft ein Verfahren zur Herstellung von Formkörpern aus mit Kurzfasern verstärkten Verbundwerkstoffen.

Es ist bekannt, Formkörper aus faserverstärktem Kunststoff mittels der Technik des Faser-Harz-Spritzens herzustellen. Dabei werden die Komponenten des Verbundwerkstoffs-Verstärkungsfasern einerseits und matrixbildendes Harz andererseits - mittels Druckluft durch zwei getrennte Düsen eines Spritzkopfs auf die Werkzeugoberfläche gespritzt. Die Düsen sind so ausgerichtet, dass der Sprühstrom der die Fasern versprühenden Düse in den Sprühstrom der Harzdüse einmündet, so dass eine Vermischung beider Komponenten erfolgt. Bevorzugt wird der Spritzkopf durch einen Roboter gesteuert.
Dem Harz werden unmittelbar vor dem Spritzen Härter und ggf. Beschleuniger zugesetzt. In einer anderen Verfahrensvariante werden Harz, Härter und ggf. Beschleuniger nacheinander in das Werkzeug gespritzt, so dass sie erst dort zusammen treffen.
Die Fasern werden in Form von kontinuierlichen Faserrovings zugeführt und unmittelbar vor dem Spritzen mittels eines Schneidwerks auf die gewünschte Länge (typischerweise 20 bis 50 mm) geschnitten.
Die mittels Faser-Harz-Spritzen erzeugten Schichten müssen anschließend - wie beim Handlaminieren - entlüftet und verdichtet werden.

Die GB 1 524 232 A betrifft glasfaserverstärkte Zernentmischungen und offenbart einen Glasfaserroving.

Die US 2006/251894 A1 beschreibt ein Aufsprüh-Verfahren zur Herstellung von faserverstärkten Kunststoffen, wobei Bündel von Glasfaserrovingen eingesetzt werden.

Die Patentanmeldung WO 2005 115944 offenbart ein Verfahren zur Herstellung eines mit Carbonfasern verstärkten Körpers mit Kohlenstoffmatrix, insbesondere einer Bremsscheibe. Die Faserverstärkung wird durch Carbonfasern verschiedener Länge gebildet, wobei in den oberflächennahen Schichten kürzere Fasern dominieren und in der inneren Schicht längere Fasern. Die Faserlänge weist also in Dickenrichtung des Körpers einen Gradienten auf.

Die Fasern werden von kontinuierlichem Tau mittels eines Schneidkopfes mit rotierenden Messern auf die gewünschte Länge geschnitten und mittels eines robotergesteuerten Spritzsystems im rotierenden Werkzeug abgelegt. Bezüglich des Werkzeugs wird der Spritzkopf so ausgerichtet, dass die Fasern eine statistische (zufällige) Orientierung annehmen. Synchron zur Ablage der Fasern wird als Matrixbildner ein härtbares Harz in Pulverform in das Werkzeug eingespritzt.
Das Werkzeug wird schichtweise mit Fasern und Harz gefüllt, wobei von Schicht zu Schicht die Faserlänge geändert wird, um die beabsichtigte Variation der Faserlänge über die Werkstückdicke zu realisieren.
Anschließend wird das Gemisch aus Fasern und der Matrixbildner im Werkzeug mittels eines langsam herunterfahrenden schweren Deckels verdichtet. Der Deckel enthält eine Vielzahl von Löchern, um das Entweichen von Luft zu ermöglichen. Anschließend wird das verdichtete Gemisch im Werkzeug erwärmt, so dass der Matrixbildner zunächst erweicht, und danach in einer Presse verfestigt und ausgehärtet
Die Umwandlung der Harzmatrix in eine Kohlenstoffmatrix erfolgt in bekannter Weise durch Carbonisierung (Pyrolyse unter Inertbedingungen). Anschließend wird der so erhaltene poröse Körper durch Nachimprägnierung mit einem carbonisierbaren Binder und erneute Carbonisierung und durch chemische Gasphasenabscheidung von Kohlenstoff verdichtet.

Entscheidend für die Qualität der mittels Faser-Harz-Spritztechnik hergestellten Formkörper ist, dass die eingetragenen Fasern einen innigen Verbund mit dem matrixbildenden Harz eingehen. Um dies zu erreichen, muss die durch den Spritzprozess erhaltene lose Faser-HarzMischung sorgfältig verdichtet und entlüftet werden, d.h. die beim Spritzprozess eingetragene Luft muss so vollständig wie möglich entfernt werden, um die Bildung von Hohlräumen durch Lufteinschlüsse zu vermeiden.
Die bei der herkömmlichen Faser-Harz-Spritztechnik durch vorgeschaltetes Schneiden kontinuierlicher Rovings erhaltenen Kurzfaserbündel sind aber relativ lose und haben dadurch eine offene Struktur mit einer sehr großen Oberfläche. Demzufolge können sie relativ viel Luft einschließen, so dass die nachfolgende Entlüftung und Verdichtung schwierig ist. Außerdem muss bei der Verdichtung eine relativ große Faseroberfläche mit Harz benetzt werden, um einen innigen Faser-Matrix-Verbund zu erhalten. Damit eine möglichst vollständige Benetzung der Oberflächen der Fasern mit Harz erreicht wird, ist der einbringbare Volumenanteil an Fasern auf 20 bis 30 % begrenzt.

Diese Probleme können durch das erfindungsgemäße Verfahren vermieden werden.
Gemäß dem erfindungsgemäßen Verfahren werden dem Spritzkopf anstelle eines kontinuierlichen zu zerschneidenden Taus bzw. Rovings diskrete kompakte plättchenförmige Gebilde aus durch einen formstabil gehärteten Binder zusammengehaltenen, parallel ausgerichteten Verstärkungsfasern, speziell Carbonfasern, zugeführt.
Die Plättchen umfassen eine oder mehrere übereinander liegende Faserlagen aus parallel nebeneinander angeordneten Fasern. Hinsichtlich ihrer Abmessungen sind die plättchenförmigen Gebilde charakterisiert durch eine Länge (Dimension in Längsrichtung der parallel angeordneten Fasern), eine Breite (bestimmt durch die Anzahl der parallel nebeneinander angeordneten Fasern in einer Faserlage) und eine Dicke (bestimmt durch die Anzahl übereinander liegender Faserlagen). Länge, Breite und Dicke können bei der Herstellung der Plättchen gezielt eingestellt werden, so dass für das erfindungsgemäße Verfahren Plättchen mit den jeweils gewünschten Dimensionen bereitgestellt werden können. Die Dimensionen der Plättchen, z.B. die Länge, können ggf. während des Faser-Harz-Spritzprozesses variiert werden, um Formkörper mit gradierter Faserverstärkung herzustellen.
Der Vorteil des erfindungsgemäßen Verfahrens besteht darin, dass die plättchenförmigen Gebilde im Gegensatz zu herkömmlichen durch Schneiden von kontinuierlichen Rovings erhaltenen Kurzfaserbündeln kompakt sind, also weitgehend frei von luftgefüllten Hohlräumen zwischen den Fasern, und eine relativ kleine Oberfläche (definiert durch Länge, Breite und Dicke der Plättchen) haben. Innerhalb der Plättchen sind die Zwischenräume zwischen den parallel angeordneten Fasern weitgehend durch den formstabil gehärteten Binder ausgefüllt. Da das Härten des Binders unter Druck vorgenommen wurde, enthalten die plättchenförmigen Fasergebilde kaum Lufteinschlüsse.
Die Plättchen werden mittels Pressluft durch die Spritzdüse in das Werkzeug eingetragen, und parallel dazu wird über eine zweite Düse der Matrixbildner eingetragen. Da die einzelnen Fasern in den Plättchen jedoch bereits durch den Binder imprägniert und miteinander verbunden sind, besteht die Funktion des Matrixbildners im wesentlichen darin, die Plättchen miteinander zu verbinden. Daher kann die Menge des einzubringenden Matrixbildners im Verhältnis zur Fasermenge vermindert werden, d.h. erfindungsgemäß lassen sich Verbundwerkstoffe mit einem höheren volumenbezogenen Anteil an Verstärkungsfasern herstellen als mittels herkömmlicher Faser-Harz-Spritztechnik.

Anschließend wird das Gemisch im Werkzeug verdichtet und der Matrixbildner in der üblichen Weise ausgehärtet. Bei Verwendung eines carbonisierbaren Matrixbildners kann der mit dem erfindungsgemäßen Verfahren erhaltene Formkörper aus faserverstärktem Kunststoff anschließend carbonisiert werden, so dass ein carbonfaserverstärkter Körper mit Kohlenstoffmatrix erhalten wird. Der karbonisierte Formkörper kann schließlich keramisiert werden, so dass ein carbonfaserverstärkter Körper mit Keramikmatrix erhalten wird.

Weitere Details, Varianten und Vorteile der Erfindung können der folgenden ausführlichen Beschreibung entnommen werden.

Ein Verfahren zur Herstellung von plättchenförmigen Fasergebilden definierter Länge, Breite und Dicke, umfassend parallel ausgerichtete Fasern, insbesondere Carbonfasern, und einen formstabil gehärteten polymeren Binder ist in der europäischen Patentanmeldung EP 1 645 671 offenbart. Dieses Verfahren, das im folgenden beispielhaft für Carbonfasern beschrieben wird, umfasst die folgenden grundsätzlichen Schritte:
- Imprägnieren mindestens eines Filamentstrangs (Rovings), der eine Vielzahl paralleler Carbonfaser-Filamente umfasst, mit einem härtbaren Binder, so dass ein Prepreg erhalten wird
- Pressen des mindestens einen oder mehrere parallel nebeneinander angeordnete imprägnierte Filamentstränge umfassenden Prepregs zu einer Bahn aus parallel orientierten Filamenten mit der gewünschten Dicke, dabei Härten des Binders durch Wärmebehandlung, so dass eine formstabile Bahn definierter Dicke erhalten wird
- Schneiden der ggf. in einzelne Bänder aufgetrennten Bahn zu plättchenförmigen Gebilden definierter Breite und Länge.

Erfindungsgemäß werden die plättchenförmigen Gebilde aus durch einen formstabil gehärteten Binder zusammengehaltenen, parallel ausgerichteten Verstärkungsfasern folgendermaßen hergestellt:
- Imprägnieren mindestens eines Filamentstrangs, der eine Vielzahl paralleler Verstärkungsfaser-Filamente umfasst, mit einem härtbaren Binder, so dass ein Prepreg erhalten wird
- Pressen des mindestens einen oder mehrere parallel nebeneinander angeordnete imprägniert Filamentstränge umfassenden Prepregs zu einer Bahn aus parallel orientierten Filamenten mit der gewünschten Dicke, dabei Härten des Binders durch Wärmebehandlung, so dass eine formstabile Bahn definierter Dicke erhalten wird
- Schneiden der ggf. in einzelne Bänder aufgetrennten Bahn zu plättchenförmigen Gebilden definierter Breite und Länge.

Vorzugsweise werden die Filamentstränge vor der Imprägnierung mit dem Binder aufgefächert, um die parallele Anordnung der Filamente nebeneinander zu erleichtern.
Der massebezogene Bindergehalt des Prepregs beträgt 25 bis 48 % und hängt von den gewählten Imprägnierungsbedingungen ab. Das Prepreg hat eine flächenbezogene Masse zwischen 200 und 500 g/m².
Das Prepreg in Form eines oder mehrerer parallel nebeneinander angeordneter imprägnierter Filamentstränge wird durch einen Walzenstuhl (vorzugsweise mit mehreren hintereinander angeordneten Walzenspalten mit abnehmender lichter Weite), einen Kalander, eine Bandpresse oder eine andere geeignete kontinuierliche Pressvorrichtung gerührt. In dieser kontinuierlichen Pressvorrichtung werden die Filamentstränge auf die gewünschte Dicke flachgepresst. Die parallel angeordneten Filamente des bzw. der so flachgepressten imprägnierten Faserstränge bilden eine unidirektionale Bahn. Bevorzugt werden die Filamentstränge soweit flachgepresst, dass die Bahn nicht mehr als drei übereinander liegende Faserlagen, und bevorzugt nur eine einzige Faserlage aus im wesentlichen parallel verlaufenden Filamenten umfasst. Typischerweise werden Bahnen mit einer Dicke im Bereich von 0,1 bis 0,6 mm hergestellt. Beim Flachpressen wird die zwischen den Filamenten befindliche Luft und die überschüssige Menge an Binder aus den Filamentsträngen heraus gedrückt, so dass eine kompakte Struktur erhalten wird.
Die Verpressung des Prepregs erfolgt im warmen Zustand (bei Temperaturen bis 200 °C), so dass der Binder entweder aushärtet oder zumindest soweit härtet, dass eine formstabile unidirektionale Bahn erhalten wird, in der die Einzelfilamente in ihrer parallelen Anordnung neben- und übereinander fixiert sind.
Beim Verlassen der kontinuierlichen Pressvorrichtung liegt somit eine flache Bahn mit einer Dicke im Bereich von zwischen 0,1 bis 0,6 mm vor, die aus parallelen, durch einen formstabil gehärteten Binder in ihrer Anordnung fixierten Filamenten gebildet ist. Die Bahn kann, falls nötig, zur besseren Handhabbarkeit in Bänder mit einer Breite zwischen 20 und 60 mm aufgetrennt werden.

Die unidirektionale Bahn oder die daraus hergestellten Bänder werden nun der Länge nach zu Streifen geschnitten, deren Breite der gewünschten Breite der Plättchen entspricht. Bevorzugt erfolgt dies mittels einer Schneidwalze oder mehrerer nebeneinander angeordneter Schneidwalzen. Es ist auch möglich, die Bahn bzw. die Bänder im noch nicht vollständig gehärteten Zustand durch in den Bandweg gespannte Drähte in Streifen zu schneiden.
Die Streifen werden direkt einer vorzugsweise kontinuierlich betriebenen Ablängeinrichtung zugeführt und zu Plättchen der gewünschten Länge geschnitten. Es ist jedoch auch möglich, das Ablängen in einem vom Schneiden der Streifen getrennten Verfahren mit anderer Geschwindigkeit vorzunehmen. Zu diesem Zweck werden die auf die gewählte Breite geschnittenen Streifen auf Spulen aufgewickelt und zur Ablängeinrichtung transportiert. Das kontinuierliche Ablängen der Streifen auf die gewünschte Länge wird bevorzugt mit einer Messerwalze durchgeführt.
Die so erhaltenen plättchenförmigen Fasergebilde zeichnen sich durch eine definierte, gleichmäßige Länge, Breite und Dicke aus. Die Plättchendicke, d.h. die Anzahl der übereinander liegenden Faserlagen, wurde beim Verpressen des Filamentstrangs bzw der Filamentstränge zu einer unidirektionalen Bahn eingestellt. Die Plättchenbreite, d.h. die von der Anzahl der in einer Faserlage parallel nebeneinander liegender Fasern bestimmte Dimension senkrecht zur Faserrichtung, wird beim Längsschneiden der Bahn bzw. der Bänder zu Streifen eingestellt. Die Plättchenlänge, d.h. die Dimension in Faserrichtung, wird beim Ablängen der Streifen zu Plättchen eingestellt.
Mindestens 90 % der so hergestellten Plättchen weisen eine Länge auf, die zwischen 90 und 110 % der mittleren Länge liegt, und eine Breite, die zwischen 90 und 110 % der mittleren Breite liegt.
Innerhalb der Plättchen werden die Fasern durch den formstabil gehärteten Binder zusammengehalten, so dass sie bei der weiteren Verarbeitung nicht zerfallen können und die Fasern innerhalb der Plättchen in ihrer parallelen räumlichen Anordnung fixiert sind.
Für das erfindungsgemäße Verfahren sind Plättchen mit einer Länge von 3 bis 13 mm, einer Breite von 0,5 bis 3 mm,(bevorzugt 0,5 bis 1 mm) und einer Dicke von 0,1 bis 0,6 mm geeignet.
Geeignete Binder sind Harze wie Phenolharze oder Epoxidharze, es können aber auch Thermoplaste verwendet werden. Insbesondere wenn die Carbonisierung bzw. Carbonisierung und Keramisierung des mittels Faser-Harz-Spritzen hergestellten faserverstärkten Formkörpers beabsichtigt ist, wird bei der Herstellung der Plättchen ein carbonisierbarer Binder eingesetzt.
Natürlich können bei der Herstellung eines Formkörpers nach dem erfindungsgemäßen Verfahren auch Plättchen mit verschiedenen Abmessungen oder/und mit verschiedenen Bindern kombiniert werden, um innerhalb des herzustellenden Formkörpers eine Variation z.B. der Faserlänge oder/und der Matrixzusammensetzung und -eigenschaften zu realisieren.

Der Spritzkopf für das erfindungsgemäße Verfahren weist ähnlich wie im Stand der Technik zwei Düsen auf, eine für die Fasern, eine für den Matrixbildner (Harz). Da jedoch keine kontinuierlichen Faserrovings zugeführt werden, entfällt das Schneidwerk an der Faserdüse. Stattdessen ist die Spritzdüse, welche die Faserplättchen versprüht, mit einer Einrichtung für den Antransport der Plättchen verbunden.
Die Förderung der Plättchen zum Spritzkopf erfolgt im einfachsten Falle mittels einer Rüttelrinne, eines Spriralförderers oder eines Förderbands. Um eine gleichmäßige Dosierung zu erreichen, kann ein Förderband mit Schaufeln verwendet werden. Für den Transport größerer Mengen ist eine pneumatische Förderung (Blasen mittels Druckluft oder Ansaugen) besser geeignet. Beispielsweise können die Plättchen in einem Reservoir in einer Wirbelschicht gehalten werden, aus der vorzugsweise kontinuierlich die benötigte Menge an Plättchen abgesaugt wird.

Der Matrixbildner, der aus der zweiten Düse des Spritzkopfs in das Werkzeug gesprüht wird, muss nicht notwendigerweise identisch sein mit Binder, der in den Plättchen die Carbonfasern fixiert. Geeignete Matrixbildner sind beispielsweise Polyesterharze, Epoxidharze, Phenolharze und Cyanesterharze.
Insbesondere wenn die Carbonisierung bzw. Carbonisierung und Keramisierung des mittels Faser-Harz-Spritzen hergestellten faserverstärkten Formkörpers beabsichtigt ist, wird bei der Herstellung der Plättchen ein carbonisierbarer Binder eingesetzt.
Dem Matrixbildner können Additive zugesetzt werden wie beispielsweise Entschäumer, Benetzer, oder oxidationshemmende Mittel.

Vorzugsweise ist im Werkzeug vor Beginn des Spritzprozesses bereits eine Gelcoatschicht aufgetragen worden, um eine geschlossene homogene Oberfläche des hergestellten Formkörpers zu erzielen.

Mit dem erfindungsgemäßen Verfahren lassen sich Formkörper mit einem volumenbezogenen Faseranteil von 40 bis 50 %, vorzugsweise bis zu 60 % herstellen, während beim herkömmlichen Faserspritzen meist nur ca. 20 bis 30 % volumenbezogener Faseranteil möglich sind. Die Möglichkeit, den Harzanteil (Anteil des Matrixbildners) zugunsten eines erhöhten Faseranteils herabzusetzen, ist ein wesentlicher Vorteil des erfindungsgemäßen Verfahrens. Da die einzelnen Fasern in den Plättchen bereits durch einem Binder imprägniert und miteinander verbunden sind, muss der Matrixbildner nicht mehr die Funktion der Imprägnierung und Einbindung der einzelnen Fasern erfüllen. Der Matrixbildner hat daher im wesentlichen die Verbindung zwischen den Plättchen auszubilden. Da die Plättchen im Gegensatz zur gleichen Menge loser Fasern eine wesentlich kleinere Oberfläche haben, wird dafür bezogen auf die Fasermenge nur relativ wenig Matrixbildner benötigt.

Das Verdichten und Entlüften der Mischung aus Faserplättchen und Matrixbildner erfolgt wie bei der herkömmlichen Faser-Harz-Spritztechnik. Dazu wird ein geeignetes Werkzeug wie beispielsweise eine Riffelwalze oder eine mit Riefen versehene Laminierrolle benutzt. Aufgrund der kompakten Struktur der Faserplättchen ist die eingeschlossene Luftmenge geringer als beim herkömmlichen Verfahren, so dass die Verdichtung und Entlüftung weniger aufwändig sind und leichter ein von Lufteinschlüssen freier Verbund erreicht werden kann. Anschließend wird der Formkörper in bekannter Weise ausgehärtet.

Mit dem erfindungsgemäßen Verfahren können beispielsweise Formkörper aus faserverstärktem Kunststoff hergestellt werden.
Werden Plättchen aus Carbonfasern, welche durch einen carbonisierbaren Binder zusammengehalten werden, und ein carbonisierbarer Matrixbildner eingesetzt, so werden carbonfaserverstärkte Grünkörper erhalten, welche die Vorstufe für die Herstellung carbonfaserverstärkte Körper mit Kohlenstoffmatrix bilden. Die Carbonisierung bzw. Graphitierung der Matrix erfolgt in bekannter Weise durch Erhitzen (Pyrolyse) unter Inertbedingungen. Wenn erforderlich, wird der carbonisierte Formkörper durch Nachimprägnierung mit einem carbonisierbaren Imprägniermittel und darauffolgende Carbonisierung und/oder durch mittels Gasphasenabscheidung von Kohlenstoff nachverdichtet. Entsprechende Techniken sind in der Fachwelt bekannt.

Formkörper mit carbonfaserverstärkter Kohlenstoffmatrix wiederum können als Vorstufe für die Herstellung von Formkörpern aus carbonfaserverstärkter Carbidkeramik, beispielsweise carbonfaserverstärktem Siliciumcarbid (C/SiC) dienen. In diesen Vorkörpern sind die Carbonfasern in den Plättchen von einer Umfüllung aus den Carbonisierungsrückständen des carbonisierten Binders umgeben und somit gegen den reaktiven Angriff des infiltrierten carbidbildenden Metalls, beispielsweise Silicium, geschütz. So ist sichergestellt, dass auch nach der Silicierung die Verstärkungsfunktion der Carbonfasern erhalten bleibt. Die Silicierung der Vorkörper erfolgt in bekannter Weise durch Infiltration mit Flüssigsilicium.

## Patentansprüche

1. Verfahren zur Herstellung eines Formkörper aus faserverstärktem Verbundwerkstoff durch Spritzen von Verstärkungsfasern und einem Matrixbildner mittels eines Spritzkopfes in ein Werkzeug und anschließendes Verdichten und Entlüften des eingespritzten Materials im Werkzeug und Härten des Matrixbildners, wobei die Verstärkungsfasern dem Spritzkopf in Form von kompakten plättchenförmigen Gebilden aus durch einen formstabil gehärteten Binder zusammengehaltenen, parallel ausgerichteten Verstärkungsfasern zugeführt werden, und
wobei die plättchenförmigen Gebilde aus durch einen formstabil gehärteten Binder zusammengehaltenen, parallel ausgerichteten Verstärkungsfasern folgendermaßen hergestellt werden;
• Imprägnieren mindestens eines Filamentstrangs, der eine Vielzahl paralleler Verstärkungsfaser-Filamente umfasst, mit einem härtbaren Binder, so dass ein Prepreg erhalten wird
• Pressen des mindestens einen oder mehrere parallel nebeneinander angeordnete imprägnierte Filamentstränge umfassenden Prepregs zu einer Bahn aus parallel orientierten Filamenten mit der gewünschten Dicke, dabei Härten des Binders durch Wärmebehandlung, so dass eine formstabile Bahn definierter Dicke erhalten wird
• Schneiden der ggf. in einzelne Bänder aufgetrennten Bahn zu plättchenförmigen Gebilden definierter Breite und Länge

2. Verfahren nach Anspruch 1, **dadurch gekennzeichnet, dass** die plättchenförmigen Gebilde eine Länge von 3 bis 13 mm, eine Breite von 0,5 bis 3 mm und eine Dicke von 0,1 bis 0,6 mm haben.

3. Verfahren nach Anspruch 1, **dadurch gekennzeichnet, dass** die Verstärkungsfasern Carbonfasern sind.

4. Verfahren nach Anspruch 1, **dadurch gekennzeichnet, dass** der Binder ein Phenolharz, ein Epoxidharz oder ein Thermoplast ist. ist

5. Verfahren nach Anspruch 1, **dadurch gekennzeichnet, dass** der Matrixbildner ein Polyesterharz, Epoxidharz, Phenolharz und Cyanesterharz ist,

6. Verfahren nach Anspruch 1, **dadurch gekennzeichnet, dass** der Matrixbildner Additive enthält.

7. Verfahren nach Anspruch 1, **dadurch gekennzeichnet, dass** der Formkörper anschließend carbonisierte oder graphitiert wird.

8. Verfahren nach Anspruch 6, **dadurch gekennzeichnet, dass** der carbonisierte oder graphitierte Formkörper anschließend mit einem carbidbildenden Metall wie Silicium infiltriert wird.

9. Verfahren nach Anspruch 1, **dadurch gekennzeichnet, dass** der volumenbezogene Faseranteil des hergestellten Formkörpers mindestens 40 % beträgt.

10. Verfahren nach Anspruch 1, **dadurch gekennzeichnet, dass** das Werkzeug vor dem Spritzprozess mit einer Gelcoatschicht versehen wird.

11. Verfahren nach Anspruch 1, **dadurch gekennzeichnet, dass** die zur Herstellung des Formkörpers verwendeten kompakten plättchenförmige Gebilde aus durch einen formstabil gehärteten Binder zusammengehaltenen, parallel ausgerichteten Verstärkungsfasern hinsichtlich ihrer Abmessungen oder/und der Art des Binders variieren.

## Claims

1. Method for producing a moulded body from fibre-reinforced composite material by injecting reinforcement fibres and a matrix former by means of an injection head into a tool and subsequently compacting and deaerating the injected material in the tool and curing the matrix former, wherein the reinforcement fibres are supplied to the injection head in the form of compact lamina-shaped structures made of reinforcement fibres that are held together by a binder cured in a dimensionally stable manner and that are aligned in parallel with one another, and
wherein the lamina-shaped structures, which are made of reinforcement fibres that are held together by a binder cured in a dimensionally stable manner and that are aligned in parallel with one another, are produced as follows:
- impregnating at least one filament strand, which comprises a plurality of parallel reinforcement fibre filaments, with a curable binder so as to obtain a prepreg,
- pressing the prepreg comprising at least one or more impregnated filament strands arranged in parallel next to one another into a web of parallel filaments having the desired thickness, and in the process curing the binder by heat treatment, so as to obtain a dimensionally stable web of a defined thickness,
- cutting the web, optionally separated into individual strips, into lamina-shaped structures of a defined width and length.

2. Method according to claim 1, **characterised in that** the lamina-shaped structures have a length of from 3 to 13 mm, a width of from 0.5 to 3 mm and a thickness of from 0.1 to 0.6 mm.

3. Method according to claim 1, **characterised in that** the reinforcement fibres are carbon fibres.

4. Method according to claim 1, **characterised in that** the binder is a phenol resin, an epoxy resin or a thermoplastic polymer.

5. Method according to claim 1, **characterised in that** the matrix former is a polyester resin, epoxy resin, phenol resin and cyanate ester resin.

6. Method according to claim 1, **characterised in that** the matrix former contains additives.

7. Method according to claim 1, **characterised in that** the moulded body is subsequently carbonised or graphitised.

8. Method according to claim 6, **characterised in that** the carbonised or graphitised moulded body is subsequently infiltrated with a carbide-forming metal such as silicon.

9. Method according to claim 1, **characterised in that** the proportion of fibres relative to the volume of the produced moulded body is at least 40 %.

10. Method according to claim 1, **characterised in that** the tool is provided with a gelcoat layer before the injection process.

11. Method according to claim 1, **characterised in that** the compact laming-shaped structures used for producing the moulded body, which are made of reinforcement fibres that are held together by a binder cured in a dimensionally stable manner and that are aligned in parallel with one another, vary in terms of their dimensions and/or the type of binder.

## Revendications

1. Procédé destiné à la fabrication d'un corps moulé en matériau composite renforcé par des fibres par l'injection de fibres de renforcement et d'un agent générateur de matrice au moyen d'une tête de pulvérisation dans un outil, suivie par un compactage et une ventilation du matériau injecté dans l'outil, puis par le durcissement de l'agent générateur de matrice,
dans lequel les fibres de renforcement sont acheminées jusqu'à la tête de pulvérisation, lesquelles se présentent sous la forme de structures compactes en forme de plaquettes, fabriquées à partir de fibres de renforcement orientées de manière parallèle et maintenues ensemble par un liant durci de manière indéformable ; et
dans lequel les structures en forme de plaquettes sont fabriquées comme suit à partir de fibres de renforcement orientées de manière parallèle et maintenues ensemble par un liant durci de manière indéformable :
- imprégnation d'au moins un toron de filaments, lequel comprend une pluralité de filaments parallèles de fibres de renforcement, avec un liant durcissable, de telle sorte qu'un préimprégné est obtenu ;
- pressage de l'au moins un ou plusieurs préimprégnés comprenant des torons de filaments imprégnés et disposés parallèlement les uns aux autres, pour donner lieu à une feuille composée de filaments orientés de manière parallèle et de l'épaisseur souhaitée, tout en provoquant le durcissement du liant par un traitement thermique, de telle sorte qu'une feuille indéformable d'épaisseur définie est obtenue ;
- découpage de la feuille, séparée le cas échéant en bandes individuelles, en des structures ayant la forme de plaquettes et présentant une largeur et une longueur définies.

2. Procédé selon la revendication 1, **caractérisé en ce que** les structures en forme de plaquettes ont une longueur comprise entre 3 et 13 mm, une largeur comprise entre 0,5 et 3 mm et une épaisseur comprise entre 0,1 et 0,6 mm.

3. Procédé selon la revendication 1, **caractérisé en ce que** les fibres de renforcement sont des fibres de carbone.

4. Procédé selon la revendication 1, **caractérisé en ce que** le liant est une résine phénolique, une résine époxy ou une résine thermoplastique.

5. Procédé selon la revendication 1, **caractérisé en ce que** l'agent générateur de matrice est une résine de polyester, une résine époxy, une résine phénolique et une résine d'ester de cyanate.

6. Procédé selon la revendication 1, **caractérisé en ce que** l'agent générateur de matrice contient des additifs.

7. Procédé selon la revendication 1, **caractérisé en ce que** le corps moulé est ensuite carbonisé ou graphité.

8. Procédé selon la revendication 6, **caractérisé en ce que** le corps moulé, carbonisé ou graphité, est ensuite infiltré avec un métal formant un carbure, tel que du silicium.

9. Procédé selon la revendication 1, **caractérisé en ce que** la proportion de fibres par rapport au volume du corps moulé ainsi fabriqué s'élève à au moins 40 %.

10. Procédé selon la revendication 1, **caractérisé en ce qu'**une couche de gelcoat est appliquée sur l'outil avant le processus d'injection.

11. Procédé selon la revendication 1, **caractérisé en ce que** les structures compactes en forme de plaquettes qui sont utilisées en vue de la fabrication du corps moulé et fabriquées à partir de fibres de renforcement orientées de manière parallèle et maintenues ensemble par un liant durci de manière indéformable, varient au regard de leurs dimensions ou / et de la nature du liant employé.
